# EUROPEAN PATENT APPLICATION

(11) **EP 2 082 703 A2**
(43) Date of publication of application: **29.07.2009**
(21) Application number: 09250113.9
(22) Date of filing: 16.01.2009
(51) Int. Cl.: A61C 13/12, A61C 19/00, A61C 3/025, B24C 1/04

(54) **Device and method for removing investment from a dental appliance**

(30) Priority: 24.01.2008 US 18868
(71) Applicant: Whip Mix Corporation, Louisville, Kentucky 40213 (US)
(72) Inventor: Hall, David, Louisville, Kentucky 40214 (US); Tapay, Joseph, Louisville, Kentucky 40208 (US)
(74) Representative: Smith, Samuel Leonard

(57) **Abstract**

A method and device for removing the bulk of the casting investment surrounding a pressed ceramic dental appliance.

## Description

### BACKGROUND

The present invention relates to an apparatus and method for automatically removing the bulk of the casting investment surrounding a dental appliance.

Utilizing the lost wax process, a positive pattern of a dental appliance is made in wax and invested in a silica and binder material to form an investment mold. This pattern is supported by a tubular wax stem called a "sprue", which also serves as the conduit for the material to be injected into the investment mold. The investment mold is then heated to evacuate the wax and cure the investment. Evacuation of the wax leaves a cavity in the investment mold that is an exact negative of the dental appliance to be molded.

A ceramic dental material (generally referred to as a pressable ceramic) is then heated until it is fluid or semi-fluid and is injected into the cavity of the investment mold through the sprue by means of a pressing plunger.

Typically, once the pressing cycle is completed, the investment casting mold (also referred to as an investment ring) containing the cast dental appliance is allowed to cool to room temperature. This takes approximately one hour. Once the mold has cooled, a technician uses a manual sandblasting apparatus to core the mold to remove the bulk of the investment material. Using too much blasting pressure or holding the sandblast stream stationary at a given location can cause abrasion or chipping and spalling of the ceramic dental appliance, especially at thin sections of the appliance.

### BRIEF DESCRIPTION OF THE DRAWINGS

Figure 1 is a perspective view of an automated divesting device;
Figure 2 is a perspective view of the investment casting ring of Figure 1, with the dental appliances and the sprues shown in phantom, invested in the ring, prior to any sandblasting;
Figure 3 is a perspective view, similar to that of Figure 2, but showing the investment ring just after automated sandblasting has started;
Figure 4 is a perspective view, similar to that of Figure 3, but showing the ring just after automated sandblasting has been completed;
Figure 5 is a perspective view, similar to that of Figure 4, but showing the remaining investment casting and the cast dental appliances after the ring is removed from the auto-divesting device of Figure 1;
Figure 6 is a perspective view, similar to that of Figure 5, but showing the remaining investment casting and the cast dental appliances after the outermost shell wall has been removed;
Figure 7 is a perspective view, similar to that of Figure 6, but showing the cast dental appliances still attached to the ring via the sprues, after the rest of the investment casting has been manually removed;
Figure 8 is a schematic view of the bead feed system for feeding the sandblasting beads to the auto-divesting device of Figure 1;
Figure 9 is a schematic of the drive system and electronic control system of the auto-divesting device of Figure 1;
Figure 10 is a side view of the investment holder of Figure 9;
Figure 11 is a plan view of the investment holder of Figure 9; and
Figure 12 is a perspective view of the investment holder of Figure 9.

### DESCRIPTION

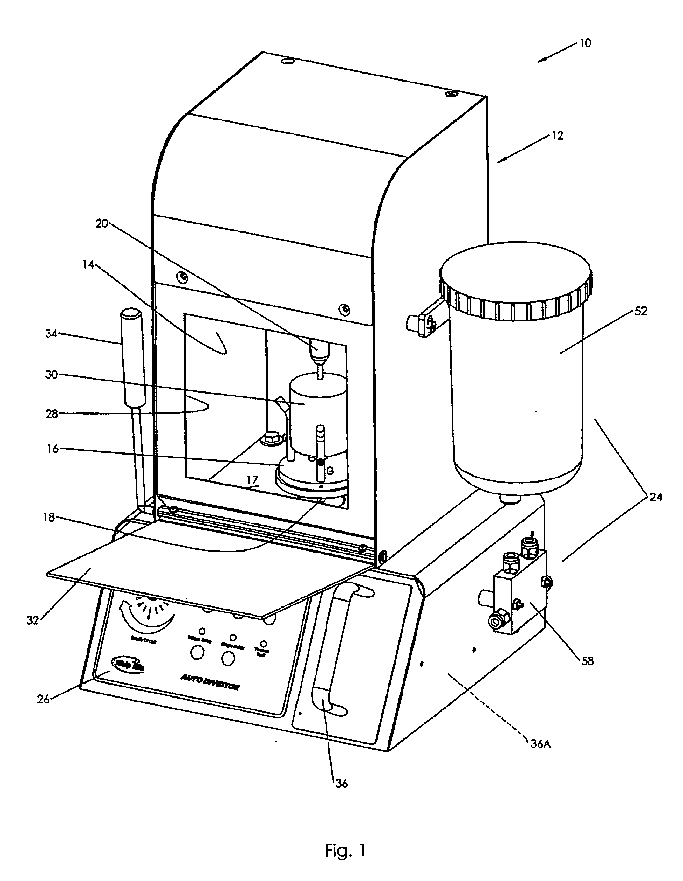

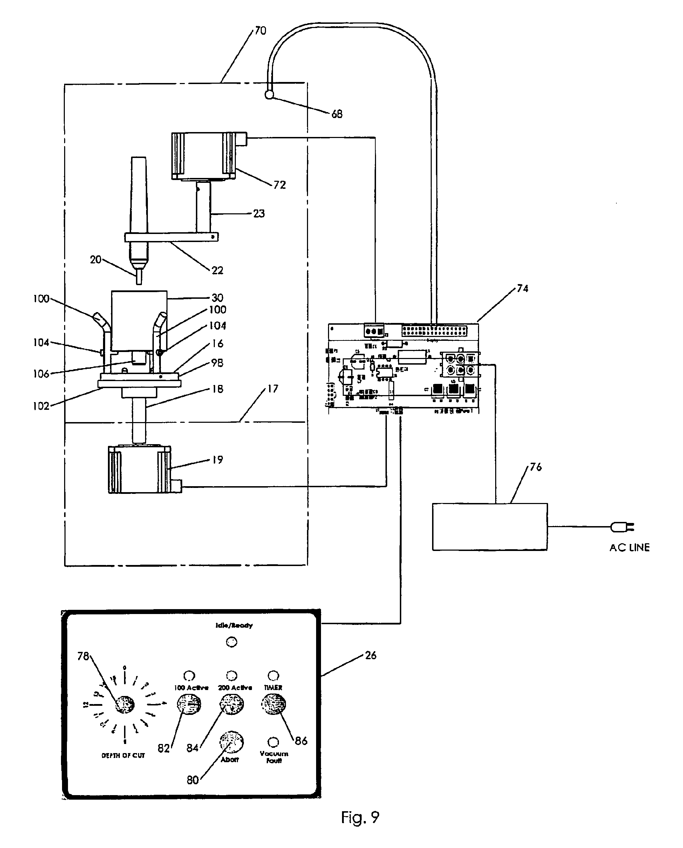

Figure 1 shows an automated divesting device 10 for automatically sand blasting the investment material to remove it from the dental appliance. As explained in more detail below, the automated divesting device 10 includes a housing 12, defining an internal chamber 14. Within that chamber 14 and housed inside the housing 12 is an investment holder platform 16 that is mounted for rotation upon a spindle 18, which defines a vertical axis of rotation. Also inside the chamber 14 is a bead blasting nozzle 20 mounted on a swing arm 22 (shown in Figure 9), which swings horizontally about a vertical axis 23, causing the nozzle 20 to follow an arcuate path that extends from the axis of rotation of the platform 16 outwardly toward the outer edge of the platform 16.

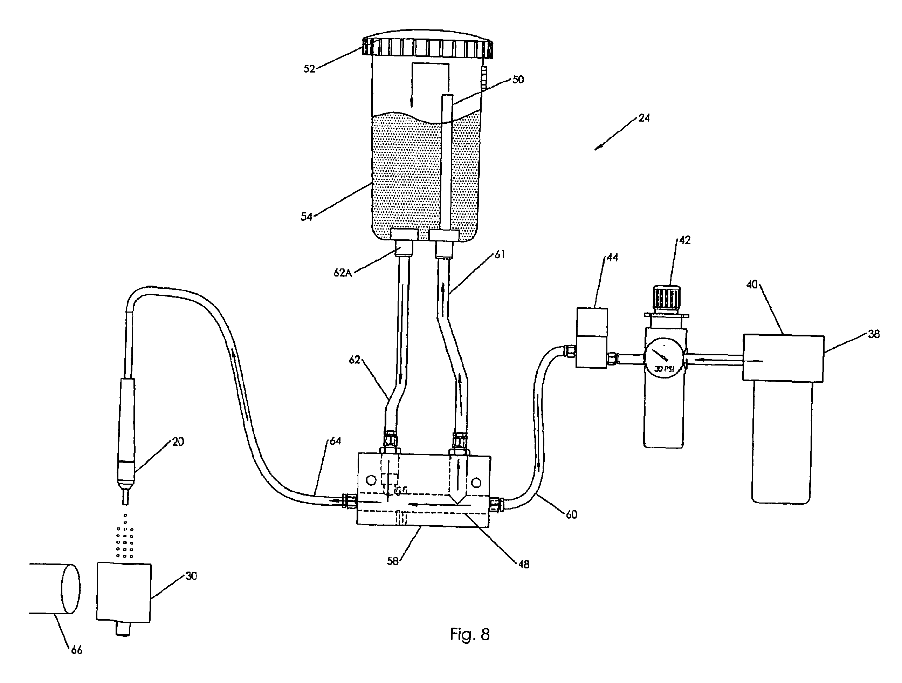

The automated divesting device 10 also includes a bead feed system 24 (the details of which are shown in Figure 8), which feeds the beads to the nozzle 20, and a user interface panel 26, which are also described in more detail below.

The housing 12 defines an opening 28 to allow access to the internal chamber 14 in order to place the investment ring 30 on the investment holder 16. A door 32, having a horizontal hinge at the bottom, is pivoted up to close the opening 28 by pushing on the lever 34. In the open position, the door 32 may be used as a flat horizontal surface on which to rest the investment ring 30 prior to placing it on the investment holder 16. A handle 36 provides access to a pull-out bin 36A, which extends along the full depth of the base of the divester 10 and captures the spent beads and investment tailings (as opposed to the vacuum exhaust 66 shown in Figure 8, which captures dust-size particles, as explained in more detail below).

Referring now to Figure 8, the bead feed system 24 is designed to reliably provide a stream of gas-entrained glass beads to the blasting nozzle 20. Pressurized air from an air compressor or other source (not shown) is fed at the inlet 38 into an air dryer 40 to provide a moisture free air supply to the bead feed system 24. The dry and pressurized air then goes through a pressure regulator 42 to control the pressure to the system 24. The cutting depth of the blasting nozzle 20 is directly proportional to the air pressure. Typically, the pressure is maintained between 25 and 40 psig. As explained later, the cutting depth is also a function of the speed of rotation of the spindle 18, so the operator may select the air pressure and the spindle speed to obtain the desired depth of cut.

A solenoid valve 44 is used to turn the air flow on and off. The solenoid valve 44 is activated by the operator pressing a button on the operator interface panel 26 (See Figures 1 and 9) to start the cutting cycle. The control system 74 (shown in Figure 9) then checks to make sure that the vacuum sensor 68 senses a sufficient vacuum level present inside the internal chamber 14 to prevent dust from blowing out of the auto-divesting device 10, and, if that condition is met, it activates the solenoid valve 44 to send beads to the nozzle 20. At the same time, the control system 74 also activates the drive motor 19, which rotates the investment ring, and it activates the stepper motor 72 that controls the position of the nozzle 20.

Referring again to Figure 8, the air stream flows through the air line 60 to an internal tee 48 in the block manifold 58, where the air flow is split, with some of the air flow going through the air line 61 and through the standpipe 50 into the bead reservoir 52, and the balance of the air going through the manifold block 58.

The bead reservoir 52 is a pressurized container which holds the sandblasting beads 54 and into which the standpipe 50 extends for a substantial distance, preferably at least halfway up the height of the reservoir 52. The air flowing beyond the tee 48 through the manifold block 58 experiences a higher internal pressure drop than the air flowing through the air line 61 and into the bead reservoir 52. As this lower pressure air flows past the inlet 62 from the bead reservoir 52 to the manifold 58, it functions as an eductor, pulling the beads 54 from the bead reservoir 52 into the manifold air stream. At the point where the stream of beads from the bead reservoir 52 meets the lower pressure air flow within the manifold 58, the higher pressure air from the bead reservoir 52, laden with beads 54, mixes with the air coming through the manifold block 58.

In this manner, the beads in the reservoir 52 are both pushed out of the reservoir 52, by the high pressure air flowing into and through the reservoir, and pulled out of the reservoir 52 by the lower pressure gas flow through the manifold block 58. Of course, both the higher pressure air flowing into and through the reservoir 52 and the lower pressure air flowing through the manifold 58 are well above the ambient pressure.

A feed line 64 leads from the manifold block 58 to the blasting nozzle 20 located inside the housing 12 of the auto-divesting device 10 (See Figure 1) and feeds the gas-entrained beads from the manifold block 58 to the nozzle 20. The feed line 64 exits the manifold block 58 at an upward angle α from the horizontal. In this embodiment, the angle α is approximately 45 degrees, but it may be any suitable angle that prevents beads 54 from continuing to flow to the nozzle as the residual air pressure in the bead canister 52 bleeds off after the solenoid valve 44 is closed and the air flow is stopped, preferably between 20 degrees and 80 degrees, and most preferably between 30 degrees and 70 degrees.

The gas-entrained beads 54 are blasted onto the investment ring 30 in the auto-divesting device 10 by the blasting nozzle 20. The aperture diameter of the blasting nozzle 20 and the inlet air pressure to the manifold block 58 are adjusted based on the bead size range to achieve the desired cutting width and depth while minimizing the bead usage. As beads 54 are consumed, and the level drops within the bead reservoir 52, a tunnel may form from the top level of the beads 54 to the exit port 62A at the bottom of the bead reservoir 52. If this happens, then beads 54 are no longer transported into the air flow. In order to avoid this problem, the control system may be programmed to periodically disrupt the air flow (by quickly closing and re-opening the solenoid valve 44) to fluidize the beads 54 and eliminate this tunneling phenomenon.

A vacuum line 66 (See the bottom left portion of Figure 8), having an inlet inside the internal chamber 14 of the housing 12, communicates with a vacuum source (not shown) in order to remove any dust-size particles generated by the bead blasting process in the auto-divesting device 10. Referring briefly to Figure 9, a vacuum sensing tube 68 is located inside the internal chamber 14, and this vacuum sensing tube 68 is connected to a vacuum sensor on the logic board 74, in order to provide an interlock to ensure that the vacuum is functioning and is pulling a sufficient vacuum to draw the dust out of the chamber 14 whenever the auto-divesting device 10 is operating. As indicated earlier, any larger particles, such as used beads and tailings, fall to the bottom of the internal chamber 14. The floor 17 of the internal chamber 14 is sloped toward the pull-out bin 36A, so the larger particles fall into the pull-out bin 36A, which is emptied periodically by pulling on the handle 36 (See Figure 1), removing the bin 36A, and dumping it out into an appropriate container.

Figure 9 is a schematic of the drive system and of the electronic controls of the auto-divesting device 10. The dotted box 70 represents the housing of the device 10. The components inside the chamber 14 include the spindle 18 which rotationally supports the investment holder 16 (which is essentially a turntable, described in more detail below) upon which the investment ring 30 is mounted and secured. The drive motor 19 which drives the spindle 18 and investment holder 16 is located below the sloped floor 17 of the internal chamber 14 and inside the housing. The blasting nozzle 20, located inside the chamber 14, is supported for radial movement above the investment ring 30 by the swing arm 22 which is actuated by the swing arm motor 72. In the embodiment of the auto-divesting device 10 shown here, the motor 72 moves the blasting nozzle 20 from one position to another, along an arcuate path above the investment ring 30, to control the relative movement between the stream of particles (the entrained beads 54) and the axis of rotation of the investment ring 30. The particle stream is directed first at a first radial position of the investment ring 30 as the investment holder 16 rotates, cutting a first ring. Then the particle stream moves to a different second radial position, and the investment holder rotates, cutting a second ring. Then the particle stream moves to a different third radial position relative to the axis of rotation of the spindle 18 as the spindle 18 rotates, removing another ring portion of the investment mold 30 from the dental appliances 88.

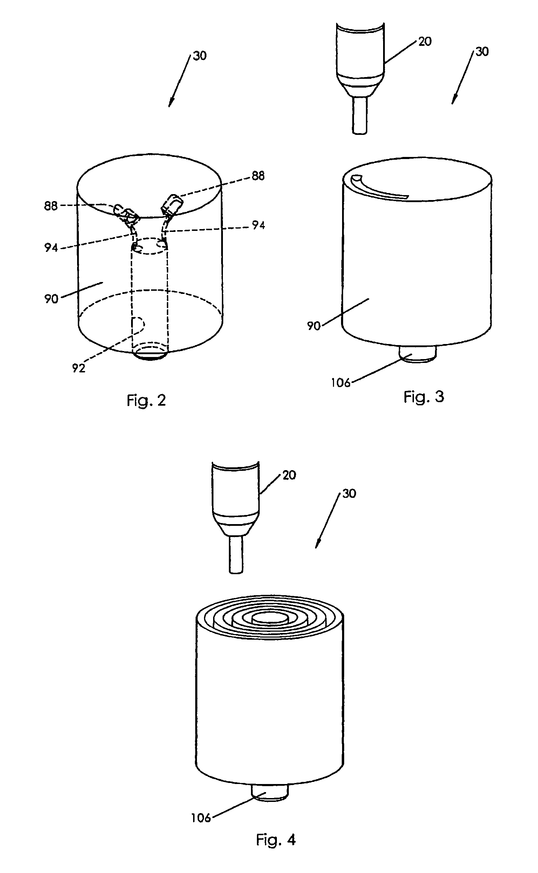

Figure 3 shows the nozzle 20 being directed toward a first radial position of the investment ring 30 as the investment ring 30 rotates. Figure 4 shows the investment ring after several rings have been cut by the beads at several different radial positions. The investment ring 30 now has most of the dental appliance exposed, with thin cylindrical portions of investment remaining intact.

It should be noted that, while the nozzle 20 in this embodiment is driven by a drive motor 72 and swing arm 22 creating an arcuate path, other drive mechanisms and other paths may be used, such as a linear actuator, for instance, which would result in a straight line path of the blasting nozzle 20 from one radial position of the investment ring 30 to another. Alternatively, the device could be arranged so the different relative radial positions between the nozzle 20 and the investment ring 30 are achieved by movement of the investment ring 30 relative to the nozzle 20.

As described above, the swing arm motor 72 is a stepper motor that locates the blasting nozzle 20 at the desired position. The swing arm motor 72 moves the blasting nozzle 20 to the correct position above the investment mold 30. In an embodiment that has been tested, the blasting nozzle 20 is first located approx. ¼ inch inwardly from the outer edge of the mold (as described in more detail below and as shown in Figure 3). After the investment ring 30 makes one complete revolution, the blasting nozzle 20 is stepped approx. 3/8 inch inwardly towards the axis of rotation of the investment ring 30 and cuts another complete revolution. This process continues until the blasting nozzle has made stepped cuts all the way to the center of the investment ring 30, after which the swing arm/nozzle is returned to a home position. To maintain a constant dwell time of the blasting nozzle 20 (and therefore of the blasting beads 54) over any particular portion of the investment ring 30, the control system increases the speed of rotation of the spindle 18 when the nozzle 20 is directed toward a position that is closer to the axis of rotation of the spindle 18, and decreases the speed of the spindle 18 when the blasting nozzle 20 steps outwardly, toward a position farther away from the axis of rotation of the spindle 18. While the blasting nozzle 20 is stepping from one radial position to the next, the control system causes the solenoid valve 44 to quickly close and re-open, which collapses any tunnels in the bead reservoir 52.

A logic board 74 (See Figure 9) in the control system contains the program logic necessary to start/stop the solenoid valve 44, control the rotational speed of the spindle 18, advance the swing arm 22, detect the vacuum level in the internal chamber 14, and interface with the control panel 26. The program logic also contains the algorithm for positioning the swing arm 22 and periodically disrupting the air flow to fluff the beads 54 and collapse any tunnels in the bead reservoir 52.

A power supply 76 provides constant direct current input to the device 10, regardless of the source voltage. It should be noted that, while the embodiment described above uses a stepper motor 72 to advance the blasting nozzle 20 in stepped increments toward the center of the investment ring 30, other configurations may also be used. For instance, the blasting nozzle 20 may be advanced in a linear motion rather than an arcuate motion, and it may be advanced continuously rather than step-wise, which would form a cut in a spiral pattern rather than in individual rings. Alternatively, the blasting nozzle 20 could be made to move along concentric circles relative to the investment holder 16, in which case the investment holder 16 could be stationary. An alternate modification could have the investment holder 16 both rotating and moving radially relative to the blasting nozzle 20, in which case the blasting nozzle 20 could be stationary. Also, the progress of the cut may be from the center of the investment ring 30 outwardly rather than progressing inwardly from the outer portion of the investment ring 30, as shown here.

As indicated earlier, in this particular embodiment, the spindle 18 is driven by a stepper motor that rotates the investment holder 16. The rotational speed of the spindle 18 can be varied at the control panel 26, by adjusting the dial 78, which would change the depth of the cut. The slower the rotational speed, the longer the dwell time of the particle stream at any given position, which results in a deeper cut. In this embodiment, the rotational speed of the spindle (and therefore the speed of rotation of the investment holder 16) is automatically increased by the program logic as the blasting nozzle 20 steps towards the center of the investment ring 30 (the axis of rotation of the ring 30) to produce a uniform dwell time and thus a uniform depth of cut. This results in the bead particle stream covering substantially the same surface area of the investment ring 30 per unit of time at the different radial positions of the investment ring 30.

The control panel 26 provides the user interface with the logic board 74. The operator selects the spindle speed (by adjusting the dial 78) to control the depth of cut. Typically, the investment rings 30 come in one of two presentations, a 100 gram ring (one inch in diameter), or a 200 gram ring (two inches in diameter). Selecting the appropriate pushbutton 82, 84 on the control panel 26 activates the appropriate cutting program depending on the size of investment ring 30 to divest. The control panel 26 provides information about the system status - ready/in process and vacuum. The program can be stopped at any time by pressing the abort button 80, which stops the rotation of the spindle 18 and closes the solenoid valve 44 to stop the air flow and the flow of particles through the nozzle 20.

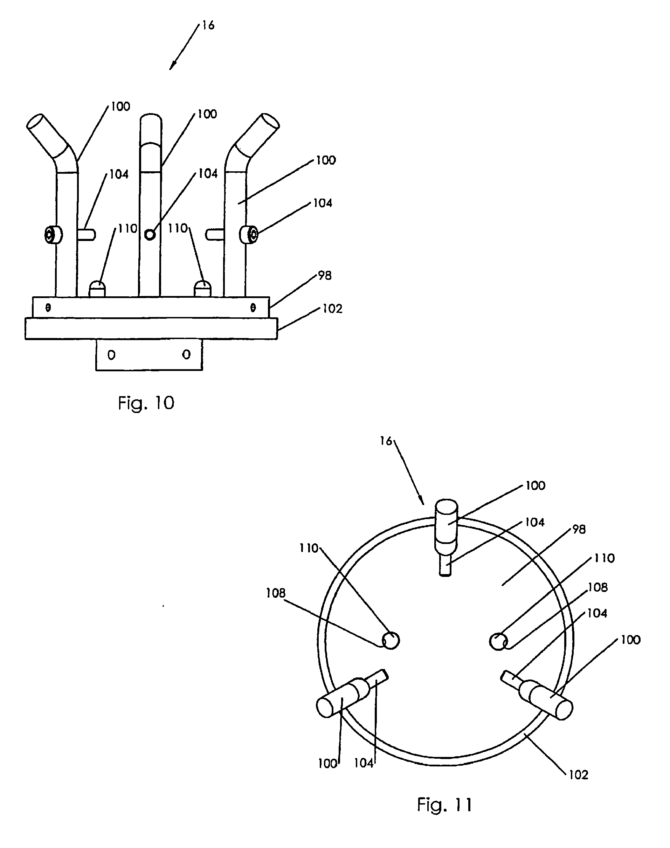

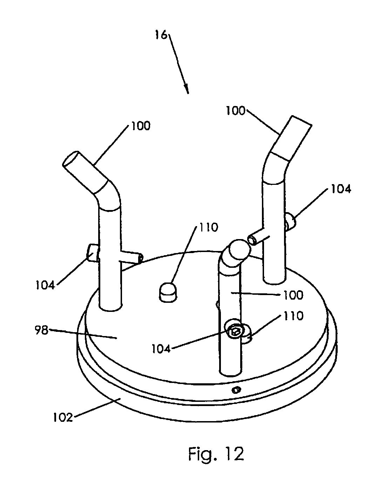

The investment holder 16 defines a receptacle that readily receives and secures a hot investment ring 30. As shown in Figures 10-12, the receptacle includes a round aluminum base plate 98 with three vertical posts 100 projecting upwardly from the base plate 98 and spaced 120 degrees apart adjacent to the outer perimeter of the base plate 98. The base plate 98 defines two index holes 108 which match with two corresponding locating pins 110 that project upwardly from the turntable 102 that is driven by the drive motor 19. The locating pins 110 thus serve not only as locators to properly center the investment holder 16 relative to the drive motor 19; they also serve as a coupling to transfer the rotation from the turntable 102 to the investment holder 16.

Each of the three vertical posts 100 includes a horizontal screw 104 having a threaded end directed toward the center of the investment holder 16. The three screws 104 are located at the same elevation and are separated from each other by 120 degrees to form a "Y-shaped" pattern as viewed from above (See Figure 11), serving as a stable platform to support the bottom of the investment ring 30 concentrically above the axis of the spindle 18. Since the screws 104 do not extend all the way to the axis of the spindle 18, and since there is a vertical space between the platform formed by the screws 104 and the base plate 98, this arrangement allows room for the alumina rod pressing plunger 106 (see Fig. 3) to protrude below the investment ring 30 without contacting the base plate 98 or interfering with the screws 104.

The investment ring 30 is constrained in the horizontal (X and Y) directions by the three vertical posts 100, since the diameter of the investment ring 30 is just slightly less than the diameter of the space formed by the vertical posts 100. The investment ring 30 is constrained in the vertical (Z) direction by the three screws 104, which form a platform, with the weight of the investment ring 30 pushing it downwardly against those screws 104. The contact surface area between the potentially very hot investment ring 30 and the investment holder 16 is minimized by this arrangement, which limits the conduction of heat from the investment ring 30, through the investment holder 16, and on to the drive motor 19, thereby protecting the drive motor 19.

The investment holder 16 is sized to match the size of investment ring 30 it is intended to support, and it can readily be changed out for a different size holder 16 just by picking it up, off of the platform 102, removing it from the chamber 14, and installing another holder 16 onto the platform 102, with the holes 108 in the new holder 16 receiving the pins 110 from the platform 102. It should also be noted that the vertical posts 100 are angled outwardly at their upper ends to help guide the investment ring 30 into position as it is inserted downwardly into the holder 16.

A timer button 86 on the control panel 26 activates a delay timer to give the investment ring 30 time to cool off before the cutting procedure. The delay timer may simply delay the cutting procedure a set amount of time, such as ten minutes, or it may use a temperature sensor that senses the temperature of the investment ring 30 and delays the beginning of the cutting procedure until the investment ring 30 falls to a certain temperature, such as 600 degrees C.

### Method of Operation:

Figure 2 depicts an investment ring 30 with the wax shapes of two dental appliances 88 invested in a silica and binder material 90. The material 90 is heated, which melts the wax and allows it to drain out through the sprues 94 and through a hollow vertical shaft 92, leaving hollow cavities in the shape of the dental appliances 88. Then ceramic pellets or ingots (not shown) are inserted into the shaft 92 and are heated up until they become fluid or semi-fluid. The ceramic material is injected into the cavities 88 of the investment mold 30 through the sprues 94 by means of an alumina rod 106 (shown in Figure 3), which travels within the shaft 92, driving the ceramic material through the sprues 94 into the cavities 88. The investment mold 30 together with the alumina rod 106 is then placed in the auto-divest device 10 to remove the investment mold 30 from the dental appliances 88.

At initial power-up of the auto-divesting device 10, the swing arm 22 is moved into contact with a fixed element (such as the wall of the device 10) to zero the swing arm position. Before starting the divesting process, the following steps are taken:

A vacuum line 66 is connected to the exhaust port for the internal chamber 14, and the vacuum pump (not shown) is turned on to produce an internal pressure in the chamber 14 that is below the ambient pressure in order to ensure that dust generated by the cutting process is removed through the vacuum line 66.
A source of pressurized air 38 is connected to the device, and the pressure at the pressure regulator 44 is set to 25 - 40 psi.

The moisture trap in the dryer 40 is checked, and any residual water is removed.

The bead canister 52 is checked, and beads 54 are added as necessary.

A hot mold 30 is removed from the ceramic pressing unit, such as the Whip Mix Pro Press, and is placed directly into the holder 16 of the auto-divesting device 10, or it may be allowed to cool before placing it in the auto-divesting device 10. Note: Ceramic manufacturers suggest that the ceramic should not be subjected to rapid cooling until the temperature is below 600 degrees C. Rapid cooling is not a concern below this temperature. Since the divesting process does promote rapid cooling, the auto-divesting device 10 has a delay mechanism, actuated by the timer button 86, that can be selected to allow the mold to cool slowly before the divesting cycle begins. In this embodiment, a preset delay time for each mold size has been established from embedded thermocouple data to ensure that, even if the mold is moved immediately from the press to the divester 10, the ceramic will be below the critical temperature before the divesting process begins. If the investment ring 30 has been out of the pressing furnace more than approximately 10 minutes and has cooled below 600 degrees C, the divesting cycle can be started immediately, without any delay.

Once the investment ring 30 is placed in the properly-sized investment holder 16, the operator closes the door 32, selects the appropriate mold size (using pushbuttons 82 or 84), and selects the delay feature (using pushbutton 86) if desired.

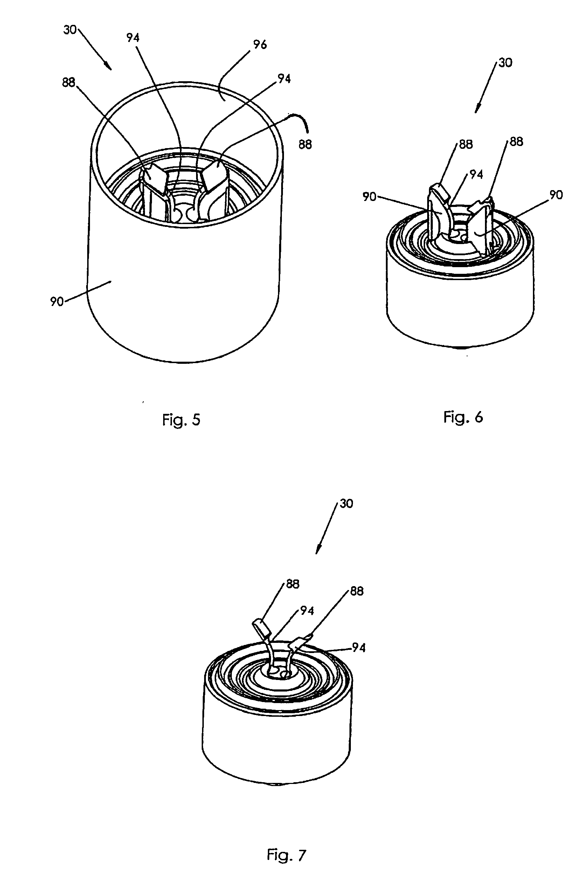

At the start of the divesting cycle, the blasting nozzle 20 is moved to a position approximately ¼ inch inside the outer edge of the investment ring 30 (See Figure 3). The spindle 18 begins rotating. The solenoid valve 44 is opened, and the bead flow begins cutting a circular swath in the investment ring 30. After each complete revolution of the spindle 18, the control logic of the auto-divesting device 10 causes the stepper motor 72 to index the blasting nozzle 20 radially inwardly approximately another ¼ inch to cut another swath. This radial shift process is repeated until the swath closest to the axis of rotation of the holder 16 is cut (See Figure 4), after which the swing arm 22, guided by the control logic of the auto-divesting device 10, returns the blasting nozzle 20 to a home position. The automatic indexing to the different radial positions of the blasting nozzle 20 relative to the investment ring 30 result in a series of thin cylindrical walls of investment remaining between the areas that are blasted away by the particle streams, as shown in Figure 4. However, since the bead stream diverges as it exits from the blasting nozzle 20, the width of the cut increases farther away from the nozzle 20. Thus, the width of the cut at the bottom of the casting ring 30 overlaps the previous cut. As a result, the circular ridges shown in Figure 4 collapse during the divesting cycle, and the only part of the mold left standing is the outer wall 96 as shown in Figure 5. This outer wall 96 serves to retain any ceramic pieces that may inadvertently break loose. The outer wall 96 is very fragile (like an egg shell) and is easily removed, which results in the arrangement shown in Figure 6.

As shown in Figure 6, the bulk of the investment 90 has been removed from around and above the ceramic dental appliances 88. However, there remains a shadow of investment 90 below the ceramic dental appliances 88. This underlying investment 90 helps support the ceramic dental appliances 88 and helps keep them intact on their respective sprues 94 so they do not break loose. The underlying investment 90 from the shadow area is later removed with normal hand-held blasting equipment, and is completed within about 30 seconds, resulting in the arrangement shown in Figure 7. The ceramic dental appliances 88 are now ready to be removed from the sprues 94 with a diamond cut-off blade.

While the embodiment described above shows an arrangement for divesting the investment mold from dental appliances, it will be obvious to those skilled in the art that modifications may be made without departing from the scope of the present invention as claimed.

## Claims

1. A method for separating a cast dental appliance from its investment mold, comprising the steps of:
applying a gas-entrained stream of particles to the investment mold, including using an automated means to control the relative movement between the stream of particles and the investment mold.

2. A method for separating a cast dental appliance from its investment mold as recited in claim 1, and further comprising the steps of:
mounting the investment mold on an investment holder;
automatically rotating the investment holder about an axis of rotation;
directing the stream of particles through a nozzle toward the rotating investment mold; and
automatically shifting the radial position of the nozzle relative to the axis of rotation of the investment holder so that, as the investment holder rotates, the particle stream is directed first at a first radial position of the investment mold and then at a different second radial position and then at a different third radial position, removing a portion of the investment mold from the dental appliance at each radial position.

3. A method for separating a cast dental appliance from its investment mold as recited in claim 2, including the step of automatically adjusting the speed of rotation of the investment holder depending upon the radial position to which the particle stream is directed, with the investment holder rotating faster when the particle stream is directed toward a radial position closer to the axis of rotation and more slowly when the particle stream is directed toward a radial position farther away from the axis of rotation, so the depth of cut is substantially uniform.

4. A method for separating a cast dental appliance from its investment mold as recited in claim 3, including the steps of:
enclosing the investment mold in a chamber; and
pulling a vacuum in the chamber to bring the pressure in the chamber below the ambient pressure and to evacuate gas and dust particles from the chamber.

5. A method for separating a cast dental appliance from its investment mold as recited in claim 2, 3 or 4 wherein the radial positions of the nozzle are shifted in a stepwise manner, with a radial shift being conducted after each complete revolution of the investment holder.

6. A method for making a dental appliance, comprising the steps of:
making a positive pattern of the dental appliance out of a wax material;
investing the positive wax pattern in a material formed from a combination of silica and binder to form an investment mold;
heating the investment mold to evacuate the wax to form a cavity and to cure the investment mold;
injecting material into the cavity to form the dental appliance; and then
using the method of claim 1 to blast away the investment mold.

7. A method for making a dental appliance as recited in claim 6, wherein said process for removing the investment mold includes mounting the investment mold on an investment holder; automatically rotating the investment holder about an axis of rotation, for instance as a turntable; directing the stream of particles toward the rotating investment mold; and radially shifting the position of the particle stream relative to the turntable so that, as the turntable rotates, the particle stream is directed first at a first radial position of the investment mold and then at a different second radial position and then at a different third radial position, removing a portion of the investment mold from the dental appliance at each radial position.

8. A method for making a dental appliance as recited in claim 7, including the step of automatically adjusting the speed of rotation of the turntable so that the particle stream covers substantially the same surface area of the investment mold per unit of time throughout its operation at the different radial positions.

9. A method for making a dental appliance as recited in claim 7 or 8, wherein the shifting of the position of the particle stream is done in a stepwise manner.

10. A device for automatically removing an investment mold from a molded dental appliance formed in the investment mold, comprising:
a housing defining an internal chamber;
a motor-driven investment holder mounted in said chamber for rotation about an axis;
a vacuum exhaust path and vacuum source in fluid communication with said internal chamber; and
a source of fluid-entrained particles directed toward said investment holder.

11. A device for automatically removing an investment mold from a molded dental appliance as recited in claim 10, and further comprising automated means for moving said source of fluid entrained particles to first, second, and third radial positions relative to said axis of rotation.

12. A device for automatically removing an investment mold from a molded dental appliance as recited in claim 11, and further comprising control means which rotates the investment holder at a higher speed when the source of fluid entrained particles is directed toward a position at a smaller radius and rotates the investment holder at a lower speed when the source of fluid entrained particles is directed toward a position at a larger radius so that the area covered per unit of time is substantially constant.

13. A device for removing a dental mold from a molded dental appliance, comprising:
a nozzle for directing a gas-entrained stream of beads toward the dental mold; and
a system for providing an entrained stream of beads to said nozzle, including
a source of pressurized gas;
a bead reservoir housing;
a fluid inlet path from said source of pressurized gas into said reservoir housing;
an outlet from said reservoir housing;
a manifold in fluid communication with said outlet, said manifold having a first manifold inlet in fluid communication with said source of pressurized gas; a second manifold inlet in fluid communication with said reservoir housing outlet; and a manifold outlet in fluid communication with a feed line that extends to said nozzle, wherein said manifold serves as an eductor, using the flow of gas from said first manifold inlet to pull a stream of gas-entrained beads from the bead reservoir housing through the second inlet and mixing that stream of gas-entrained beads with gas from the first manifold inlet and directing that mixed stream out the manifold outlet to the feed line and then to the nozzle.

14. A device for removing a dental mold from a molded dental appliance as recited in claim 13, wherein at least a portion of said feed line extends at an upward angle between twenty and eighty degrees to the horizontal.

15. A device for removing a dental mold from a molded dental appliance as recited in claim 14, wherein said nozzle is mounted on an arm, the device further comprising automated means for controlling the position of said arm and said nozzle and optionally further comprising an investment holder and automated means for rotating said investment holder about an axis of rotation.
